(19) Europäisches Patentamt
European Patent Office
Office européen des brevets

(11) Veröffentlichungsnummer: **0 173 907**
**B1**

# (12) EUROPÄISCHE PATENTSCHRIFT

(45) Veröffentlichungstag der Patentschrift: **11.07.90**

(21) Anmeldenummer: **85110368.9**

(22) Anmeldetag: **19.08.85**

(51) Int. Cl.[5]: **B 29 C 45/14**, B 60 J 1/00, C 08 G 18/65, E 06 B 3/62 // B29K75:00

## (54) Verfahren zum Ummanteln von Glasscheibenkanten mit elastischen Polyisocyanat-polyadditionsprodukten.

(30) Priorität: **01.09.84 DE 3432205**

(43) Veröffentlichungstag der Anmeldung:
**12.03.86 Patentblatt 86/11**

(45) Bekanntmachung des Hinweises auf die Patenterteilung:
**11.07.90 Patentblatt 90/28**

(84) Benannte Vertragsstaaten:
**BE DE FR GB IT NL SE**

(56) Entgegenhaltungen:
**EP-A-0 081 671**
**DE-A-3 020 906**
**DE-A-3 135 672**
**DE-A-3 216 063**
**DE-A-3 227 647**
**DE-B-1 509 278**
**FR-A-2 553 083**
**US-A-3 872 198**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Schlotterbeck, Dietrich, Dr.**
**Mannheimer Strasse 13a**
**D-6703 Limburgerhof (DE)**
Erfinder: **Schmidt, Hans Ulrich**
**Wredestrasse 53**
**D-6700 Ludwigshafen (DE)**
Erfinder: **Ropte, Eckhard, Dr.**
**Woehlerstrasse 12**
**D-6700 Ludwigshafen (DE)**

EP 0 173 907 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf ein Verfahren zu Ummanteln von Glasscheiben mit einem Kunststoff nach dem Oberbegriff des Anspruchs 1.

Eine geeignete Vorrichtung zur Herstellung eines Fensterrahmenelements, insbesondere für Kraftfahrzeuge, bei der die Fahrzeugscheibe, die auch eine gekrümmte Oberfläche aufweisen kann, mit einem Kunststoff umspritzt wird, wird in der DE—A—32 16 063 beschrieben. Mit Hilfe dieser Vorrichtung wird die Fahrzeugscheibe, außer in ihrem Randbereich, durch elastische Widerlager, die an die Oberflächenform der Scheibe angepaßt sind, gehalten. Der Scheibenrand ragt in eine umlaufende Ausnehmung hinein, in die der Kunststoff mit hohem Druck eingespritzt wird. Die Offenlegungsschrift enthält keine Angaben hinsichtlich der Art des zur Ummantelung geeigneten Kunststoffs.

Ein gattungs gemäßes Verfahren zum Einbetten von Platten, wie z.B. von Glasscheiben, in eine Randeinfassung sowie eine Vorrichtung hierfür sind aus der DE—B—1 509 278 bekannt, wobei als geeignete Einbettungswerkstoffe an sich bekannte thermoplastische oder in der Wärme aushärtende Kunststoffe genannt werden. Die Auslegeschrift erwähnt zwar Polyurethanharze als geeignetes Einbettungsmaterial, ohne jedoch weder die Art der eingesetzten Polyurethanharze, wie z.B. thermoplastische Polyurethan-Elastomere, Polyurethan-Gießelastomere wie Heiß -oder Kaltgießelastomere, u.a. noch deren Aufbaukomponenten oder Herstellungs verfahren hierzu zu beschreiben.

Bekanntermaßen tritt beim Einspritzen der hochviskosen Schmelzen von thermoplastischen Kunststoffen, wie z.B. PVC oder Polyurethan, ein extrem hoher Formwerkzeuginnendruck auf. Die zur Kompensation dieses Drucks erforderliche hohe Formschließkraft führt häufig zu Glasbruch, der eine rentable Produktion von mit thermoplasten unmantelten Glasscheiben, insbesondere gewölbten Glasscheiben unmöglich macht.

Die Aufgabe der vorliegenden Erfindung bestand darin, ein Verfahren zu schaffen, das den oben genannten Nachteil nicht aufweist.

Diese Aufgabe konnte überraschenderweise gelöst werden durch ein Verfahren zum Ummanteln von Glasscheibenkanten mit einem Kunststoff mit Hilfe eines Formwerkzeugs, wobei man

1. die Glasscheibe in das offene Formwerkzeug einlegt,
2. das Formwerkzeug verschließt,
3. den hierbei gebildeten Freiraum zwischen Glasscheibe und Formwerkzeug mit einem aushärtenden Kunststoff beschickt und
4. diesen aushärten läßt,

das dadurch gekennzeichnet ist, daß der aushärtende Kunststoff aus einer reaktionsfähigen Mischung besteht, die enthält

a) organische Polyisocyanate,
b) höhermolekulare Verbindungen mit mindestens zwei reaktiven Wasserstoffatomen, ausgewählt aus der Gruppe der Polyether-polyamine, Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten höhermolekularen Verbindungen,
c) Kettenverlängerungsmittel und/oder Vernetzer mit einem Molekulargewicht von 60 bis 600 und einer Funktionalität von 2 bis 4, ausgewählt aus der Gruppe der aliphatischen, cycloaliphatischen oder araliphatischen Diole und/oder Triole, der sekundären aromatischen Diamine, der primären, unsubstituierten und/oder substituierten aromatischen Di- und/oder höherwertigen Polyamine und
d) Katalysatoren sowie gegebenenfalls
e) Hilfsmittel und/oder Zusatzstoffe

und man diese Reaktionsmischung in den Freiraum zwischen Glasscheibe und Formwerkzeug mittels der Reaktionsspritzgußtechnik einspritzt und zu Polyurethan-, Polyurethan-Polyharnstoff- oder Polyharnstoff-Elastomeren aushärten läßt.

Nach dem erfindungsgemäßen Verfahren können nach Kraftfahrzeugtyp zugeschnittene, und gegebenenfalls sphärisch verformte Glasscheiben, insbesondere planare Seitenscheiben, bei Verwendung von vorzugsweise hochreaktiven one shot-Polyurethan-Polyharnstoff- oder -Polyharnstoff-Elastomersystemen mit Hilfe der Reaktionsspritzgußtecknik in einem Verfahrensschritt in kurzen Zykluszeiten, z.B. bei Formstandzeiten unter 120 Sekunden, vorzugsweise von 5 bis 60 Sekunden, ummantelt werden. Durch das Formwerkzeug kann die Profilgeometrie der Glasscheibenkante im wesentlich beliebig gestaltet und somit dem Metallrahmen der Fahrgastzelle angepaßt werden. Vorteilhaft ist ferner, daß durch geeignete Wahl der Ausgangsstoffe (a) bis (d) Polyurethan-, Polyurethan-Polyharnstoff- oder Polyharnstoff-Elastomere — im folgenden abgekürzt PU-, PU-PH- bzw. PH-Elastomere genannt — mit den erforderlichen unterschiedlichsten mechanischen Eigenschaften hergestellt werden können, wobei insbesondere die Härte, Zugfestigkeit und Weiterreißfestigkeit von Bedeutung sind.

Zur Ummantelung der Kanten können Glasscheiben mit unterschiedlicher chemischer Zusammensetzung eingesetzt werden.

Vorzugsweise Verwendung finden Glasscheiben aus Silikatglas. Geeignet sind jedoch auch mechanisch oder chemisch vorbehandelte Glasscheiben, z.B. mit Metalldampf beschichtete oder mit transparenten Kunststoffolien, beispielsweise Polyamid-, Polycarbonat- oder Polyurethanfolien belegte Glasscheiben sowie Verbundglasscheiben. Die Glasscheiben besitzen üblicherweise eine Dicke von 3 bis 20 oder mehr mm, vorzugsweise von 3 bis 8 mm.

Zur Erzielung eines gut haftenden Verbunds wird die Grenzfläche der Glasscheibe vor der Ummantelung mit PU-, PU-PH- oder PH-Elastomeren zweckmäßigerweise mit einem oder mehreren Haftvermittler beschichtet. Geeignete Haftvermittler sind beispielsweise anorganofunktionelle Silanester, organische Polyisocyanate, modifizierte organische Polyisocyanate, Isocyanatendgruppen enthaltende Prepolymere und polyfunktionelle Epoxidverbindungen. Vorzugsweise verwendet werden γ-Aminopropyltriethoxisilan, γ-Aminopropyl-trimethoxisilan, N-β-Aminoethyl-γ-aminopropyl-triethoxisilan, N-β-Aminoethyl-γ-aminopropyl-trimethoxisilan, γ-Mercaptopropyl-trimethoxisilan und γ-Mercaptopropyltriethoxisilan. Je nach chemischer Zusammensetzung der Glasscheibe und Struktur des Haftvermittlers wird dieser üblicherweise auf die vorzugsweise entfettete Glasscheibe aus einer 1 bis 10 Gew.%, vorzugsweise 2 bis 6 Gew.% Haftvermittler enthaltenden Lösung in einer solchen Menge nach bekannten Methoden, beispielsweise durch Bestreichen, Besprühen, Rollen, Eintauchen u.a., aufgetragen, daß nach Verdunsten des Lösungsmittels, vorzugsweise von Isopropanol, die Schichtdicke 5 bis 80 µm, vorzugsweise 10 bis 40 Mikrometer beträgt. Die Haftvermittlerschicht, die aus einer oder mehreren Lagen und aus einem oder verschiedenen Haftvermittler bestehen kann, wird üblicherweise in einem einmehrstufigen Verfahren aufgebracht. Die Grunschicht besteht zweckmäßigerweise aus einem Aminoalkyltrialkoxisilan, die nach dem Verdunsten des Lösungsmittels mit einem anderen Haftvermittler mit nichtreaktiven oder vorzugsweise reaktiven Gruppen überschichtet wird. Derartige Haftvermittler mit reaktiven Gruppen sind beispielsweise organische, gegebenenfalls modifizierte Polyisocyanate, beispielsweise Carbodiimid-, Isocyanurat-, Urethan- und/oder Uretonimingruppen enthaltende Polyisocyanate auf Basis von Diphenylmethan-diisocyanaten, Mischungen aud Diphenylmethandiisocyanaten und Polyphenyl-polymethylen-polyisocyanaten mit geringem Dampfdruck, Isocyanatendgruppen aufweisende Prepolymere auf Basis von aromatischen, aliphatischen und/oder cycloaliphatischen Diisocyanaten und Polyester- und/oder Polyether-polyolen und Polyepoxid-Verbindungen.

Zu den für das erfindungsgemäße Verfahren verwendbaren Ausgangskomponenten (a) bis (d) und gegebenenfalls (e) zur Herstellung der kompakten PU-, PU-PH- oder PH-Elastomeren ist folgendes auszuführen:

(a) Als organische Polyisocyanate kommen die an sich bekannten aliphatischen, cycloaliphatischen und vorzugsweise aromatischen mehrwertigen Isocyanate in Frage. Im einzelnen seien beispielhaft genannt 1,6-Hexamethylen-diisocyanat, 1 - Isocyanato - 3,3,5 - trimethyl - 3 - isocyanatomethyl - cyclohexan, 2,4 - und 2,6 - Hexahydrotoluylen - diisocyanat sowie die entsprechenden Isomerengemische, 4,4' - , 2,2' - und 2,4' - Dicyclohexylmethan - diisocyanat sowie die entsprechenden Isomerengemische, Mischungen aus 4,4' - , 2,2' - und 2,4' - Dicyclohexylmethan - diisocyanaten und Polymethylen - polycyclohexylen - polyisocyanaten, 2,4 - und 2,6 - Toluylen - diisocyanat und die entsprechenden Isomerengemische, 4,4' - , 2,4' - und 2,2' - Diphenylmethan - diisocyanat und die entsprechenden Isomerengemische, Mischungen aus 4,4' - , 2,4' - und 2,2' - Diphenylmethan - diisocyanaten und Polyphenyl - polymethylen - polyisocyanaten (Roh-MDI) und Mischungen aus Roh-MDI und Toluylen-diisocyanaten.

Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di- und/oder Polyisocyanate. Im einzelnen kommen beispielsweise in Betracht: Urethangruppen enthaltende aromatische Polyisocyanate mit NCO-Gehalten von 33,6 bis 15 Gew.%, vorzugsweise von 31 bis 21 Gew.%, beispielsweise mit niedermolekularen Diolen, Triolen, Dialkylenglykolen, Trialkylenglykolen oder Polyoxyalkylen-glykolen mit Molekulargewichten bis 800 modifiziertes 4,4'-Diphenylmethan-diisocyanat oder Toluylen-diisocyanat, wobei als Di- bzw. Polyoxyalkylen-glykole, die einzeln oder als Gemische, eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 21 bis 9 Gew.%, vorzugsweise von 21 bis 14 Gew.%. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, z.B. auf Basis von 4,4'-, 2,4'- und/oder 2,2'-Diphenylmethan-diisocyanat und/oder 2,4- und/oder 2,6-Toluylen-diisocyanat und insbesondere 2,4- und 2,6-Toluylen-diisocyanat sowie die entsprechenden Isomerengemische, 4,4'-, 2,4'- und 2,2'-Diphenylmethan-diisocyanat sowie die entsprechenden Isomerengemische z.B. aus 4,4'- und 2,4'-Diphenylmethan-diisocyanaten, Mischungen aus Diphenylmethan-diisocyanaten und Polyphenyl-polymethylen-polyisocyanaten (Roh-MDI) und Gemische aus Toluylen-diisocyanaten und Roh-MDI.

Vorzugsweise kommen jedoch zur Anwendung: Urethangruppen, Carbodiimidgruppen und/oder Isocyanuratringe enthaltende Polyisocyanate, z.B. auf Diphenylmethan-diisocyanat und/oder Toluylendiisocyanat-Basis, Toluylen-diisocyanate, Mischungen aus Roh-MDI und Toluylen-diisocyanaten und insbesondere Mischungen aus 4,4'- und 2,4'-Diphenylmethan-diisocyanaten oder Mischungen aus den Diphenylmethan-diisocyanat-Isomeren und Polyphenyl-polymethylen-polyisocyanaten.

(b) Als höhermolekulare Verbindungen (b) mit mindestens zwei reaktiven Wasserstoffatomen werden zweckmäßigerweise solche mit einer Funktionalität von 2 bis 8, vorzugsweise 2 bis 4 und einem Molekulargewicht von 800 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole,

Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäure kommen beispielsweise im Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20—35:35—50:20—32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton, oder Hydroxycarbonsäuren, z.B. ω-Hydroxycapronsäure.

Die Polyester-polyole besitzen vorzugsweise eine Funktionalität von 2 bis 3 und ein Molekulargewicht von 800 bis 3.000 und vorzugsweise 1.800 bis 2.500.

Insbesondere als Polyole verwendet werden jedoch Polyether-polyole, die nach bekannten Verfahren, beispielsweise durch kationische Polymerisation mit Lewis-Säuren, wie Antimonpentachlorid, Borfluorid-Etherat u.a. oder Bleicherde als Katalysatoren oder durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren aus einem oder mehreren Alkylenoxiden mit 2 bis 4 Kohlenstoffatomen im Alkylenrest und einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierund nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamim, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diaminodiphenylmethan.

Als Startermoleküle kommen ferner in Betracht Alkanolamine, wie Enthanolamin, Diethanolamin, N-Methyl- und N-Ethyl-ethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimetehylol-propan, Pentaerythrit, Sorbit und Saccharose.

Die Polyether-polyole besitzen vorzugsweise eine Funktionalität von 2 bis 4 und Molekulargewichte von 800 bis 8.000, vorzugsweise 1.200 bis 6.000 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von

Polyoxyalkylen-polyolen mit Aminen oder Ammoniak in Gegenwart von Wasserstoff und Katalysatoren (DE 12 15 373).

(c) Als Kettenverlängerungsmittel und/oder Vernetzer (c) verwendet werden di- bis tetrafunktionelle, vorzugsweise, difunktionelle Verbindungen mit Molekulargewichten von 60 bis 600, vorzugsweise 60 bis 300 aus der Gruppe der aliphatischen, cycloaliphatischen oder araliphatischen Diole und/oder Triole, der sekundären aromatischen Diamine und vorzugsweise der primären, unsubstituierten und/oder insbesondere substituierten aromatischen Di- und/oder höherwertigen Polyamine.

Geeignete Diole oder Triole besitzen vorteilhafterweise Molekulargewichte kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Als sek. aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek.-pentyl-, N,N'-Di-sek-hexyl-, N,N'-Di-sek-decyl-, N,N'-Dicyclohexyl-p- bzw. -m-phenylendiamin, N,N'-Dimethyl-, N,N'-Diethyl-, N,N'-Diisopropyl-, N,N'-Di-sek-butyl-, N,N'-Dicyclohexyl-4,4'-diamino-diphenylmethan und N,N'-Di-sek-butyl-benzidin.

Als unsubstituierte primäre aromatische Diamine und/oder höherwertige Polyamine finden beispielsweise Verwendung: 1,2-, 1,3- und 1,4-Phenylendiamin, Benzidin, 4,4'- und 2,4'-Diaminodiphenylmethan, 4,4'- und 2,4'-Diaminodiphenylmethan, 4,4'-Diaminodiphenylether, Naphthylen-1,5-diamin, Naphthylen-1,8-diamin und Polyphenyl-polymethylen-polyamine sowie Mischungen aus Diaminodiphenylmethanen und Polyphenyl-polymethylen-polyaminen. Geeignet sind auch substituierte primäre aromatische Diamine, zweckmäßigerweise monoalkylsubstituierte aromatische Diamine, bei denen die Reaktivität der Aminogruppe durch den Substituienten nicht wesentlich negativ beeinflußt wird, wie z.B. 3,4-, 2,4- und 2,6-Toluylen-diamin.

Als substituierte primäre aromatische Diamine und/oder höherwertige Polyamine die insbesondere Anwendung finden, werden zweckmäßigerweise solche verwendet, die in ortho-Stellung zu den Aminogruppen mindestens einen Alkylsubstituienten besitzen, welcher die Reaktivität der Aminogruppe durch sterische Hinderung vermindert, die bei Raumtemperatur flüssig und mit der Komponente (b) unter den Verarbeitungsbedingungen zumindest teilweise, vorzugsweise jedoch vollständig mischbar sind. Bewährt haben sich beispielsweise alkylsubstituierte meta-Phenylendiamine der Formeln

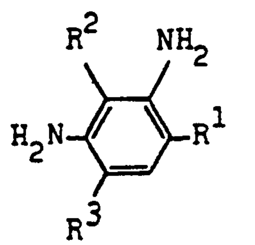

und/oder

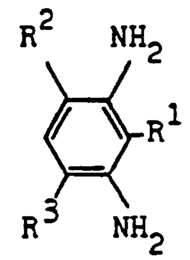

in denen $R^3$ und $R^2$ gleich oder verschieden sind und einen Methyl-, Ethyl, Propyl- und Isopropylrest bedeuten und $R^1$ ein linearer oder verzweigter Alkylrest mit 1 bis 10, vorzugsweise 4 bis 6 Kohlenstoffatomen ist. Insbesondere bewährt haben sich solche Alkylreste $R^1$, bei denen die Verzweigungsstelle am $C^1$-Kohlenstoffatom sitzt. Als Reste $R^1$ seien beispielhaft genannt der Methyl-, Ethyl-, Isopropyl-, 1-Methyloctyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.

Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 1-Methyl-3,5-diethyl-2,4- bzw. -2,6-phenylendiamine, 2,4-Dimethyl-6-tert. butyl-, 2,4-Dimethyl-6-isooctyl- und 2,4-Dimethyl-6-cyclohexyl-phenylen-diamin-1,3.

Geeignet sind ferner 3,3'-di- und/oder 3,3',5,5'-tetra-n-alkylsubstituierte 4,4'-Diamino-diphenylmethane wie z.B. 3,3'-Dimethyl-, 3,3'-Diethyl-, 3,3'-Di-n-propyl-, 3,3',5,5'-Tetramethyl-, 3,3',5,5'-Tetraethyl- und 3,3',5,5'-Tetra-n-propyl-4,4'-diaminodiphenylmethan.

Als alkylsubstituierte 4,4'-Diamino-diphenylmethane finden vorzugsweise solche der Formel

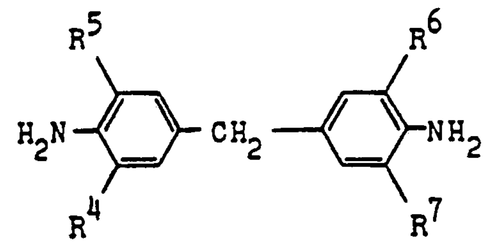

Verwendung, in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek. Butylrest sein muß. Die 4,4'-Diamino-diphenyl-methane können auch im Gemisch mit Isomeren der Formeln

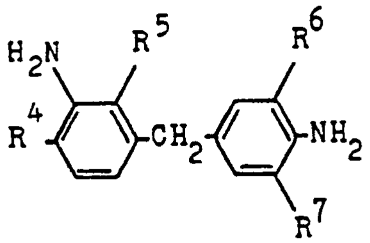

und/oder

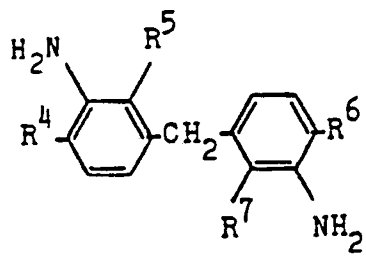

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.butyl-, 3,3',5-Triethyl-5'-sek.butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek-butyl-, 3,3'-Diethyl-5,5'-di-sek-butyl-, 3,5-Dimethyl-3',5'-diisopropyl-, 3,5-Diethyl-3',5'-diisopropyl-, 3,5'-Dimethyl-3',5-di-sek-butyl-, 3,5-Diethyl-3',5'-di-sek-butyl-4,4'-diamino-diphenylmethan, 3-Methyl-3',5,5'-triisopropyl-, 3-Ethyl-3',5,5'-triisopropyl-, 3-Methyl-3',5,5'-tri-sek-butyl-, 3-Ethyl-3',5,5'-tri-sek-butyl-4,4'-diamino-diphenylmethan, 3,3'-Diisopropyl-5,5'-di-sek-butyl-, 3,5-Diisopropyl-3',5'-di-sek-butyl-, 3-Ethyl-5-sek-butyl-3',5'-diisopropyl-, 3-Methyl-5-tert.butyl-3',5'-diisopropyl-, 3-Ethyl-5-sek.-butyl-3'-methyl-5'-tert.butyl-, 3,3',5,5'-Tetraisopropyl- und 3,3',5,5'-Tetra-sek-butyl-4,4'-diaminodiphenylmethan. Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane können einzeln oder in Form von Mischungen eingesetzt werden.

Die genannten Kettenverlängerungsmittel und/oder Vernetzer (c) können einzeln oder als Mischungen von gleichen oder verschiedenen Arten verwendet werden. Bewährt haben sich beispielsweise Mischungen aus 5 bis 95 Gew.% mindestens eines Diols und/oder Triols und 95 bis 5 Gew.% mindestens eines alkylsubstituierten meta-Phenylendiamins, 3,3'-dialkyl- und/oder 3,3',5,5'-tetraalkylsubstituierten 4,4'-Diamino-diphenylmethans oder vorzugsweise alkylsubstituierten meta-Phenylen-diamins, wobei die Gew.% bezogen sind auf das Gesamtgewicht der Komponente (c) und insbesondere Mischungen aus 80 bis 50 Gew.% 2,4-Dimethyl-6-tert.-butyl-phenylendiamin-1,3, 2,4-Diethyl-6-methyl- und/oder 2-Methyl-4,6-diethyl-phenylendiamin-1,3 und 20 bis 50 Gew.% 1,3-Phenylen-diamin, 2,4- und/oder 2,6-Toluylendiamin, wobei die Gew.% bezogen sind auf das Gesamtgewicht der Mischung der Komponenten (c).

Die Kettenverlängerungsmittel und/oder Vernetzer (c) sowie deren Mischungen kommen beim erfindungsgemäßen Verfahren in Mengen von 2 bis 60 Gew.%, vorzugsweise 8 bis 50 Gew.% und insbesondere 10 bis 40 Gew.%, bezogen auf das Gewicht der Komponente (b) zum Einsatz.

d) Als Katalysatoren (d) werden insbesondere Verbindungen verwendet, die die Reaktion der Hydroxylgruppen enthaltenden Verbindungen der Komponenten (b) und (c) mit den Polyisocyanaten stark beschleunigen. In Betracht komen organische Metallverbindungen, vorzugsweise organische Zinnverbindungen, wie Zinn-(II)-salze von organischen Carbonsäuren, z.B. Zinn-(II)-acetate, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-N-Cyclohexylmorpholin, N,N,N',N'-Tetramethyl-ethylendiamin, N,N,N',N'-Tetramethyl-butandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie

Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination bezogen auf das Gewicht der Komponente (b).

e) Der Reaktionsmischung können gegebenenfalls auch noch Hilfsmittel und/oder Zusatzstoffe (e) einverleibt werden. Genannt seien beispielsweise Treibmittel, oberflächenaktive Substanzen, Füllstoffe, Farbstoffe, Pigmente, Flammshutzmittel, Trennmittel, Hydrolyseschutzmittel, fungistatisch und bakteriostatisch wirkende Substanzen.

Zu Treibmitteln, welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,1 bis 2%, bezogen auf das Gewicht an Polyisocyanat.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid. Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen PU-, PU-PH- oder PH-Elastomeren hängt ab von der Dichte, die man erreichen will sowie gegebenenfalls von der Mitverwendung von Wasser. Im allgemeinen liefern Mengen von 1 bis 15 Gewichtsteilen, bezogen auf 100 Gewichtsteile organisches Polyisocyanat, zufriedenstellende Ergebnisse.

Als oberflächenaktive Substanzen kommen Verbindungen in Betracht, welche zur Unterstützung der Homogenisierung der Ausgangsstoffe dienen. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate, wie Antigorit, Serpentin, Hornblenden, Amphibole, Chrisotil, Talkum; Metalloxiode, wie Kaolin, Aluminiumoxide, Titanoxide und Eisenoxide, Metallsalze wie Kreide, Schwerspat und anorganische Pigmente, wie Cadmimsulfid, Zinksulfid sowie Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest und Wollastonit. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherpolyolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt und danach gegebenenfalls aminiert werden sowie Filler-polyoxyalkylen-polyole oder -polyamine, bei denen wäßrige Polymerdispersionen in Polyoxyalkylen-polyol- oder -polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden.

Die anorganischen und/oder organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Nähere Angaben über die obengenannten anderen üblichen Hilfs- und Zusatzstoffe sind der Fachliteratur, beispielsweise der Monographie von J. H. Saunders und K. C. Frisch "High Polymers" Band XVI, Polyurethanes, Teil 1 und 2, Verlag Interscience Publishers 1962 bzw. 1964, oder dem Kunstoff-Handbuch, Band VII, Polyurethane 1. und 2. Auflage, Carl Hanser Verlag, München 1966 und 1983, zu entnehmen.

Zur Herstellung der PU-, PU-PH- oder PH-Elastomeren werden die organischen Polyisocyanate (a), höhermolekularen Verbindungen mit mindestens zwei reaktiven Wasserstoffatomen (b) und Kettenverlängerungsmittel und/oder Vernetzer (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und (c) 1:0,85 bis 1,25, vorzugsweise 1:0,95 bis 1,15 und insbesondere 1:0,98 bis 1,05 beträgt.

Die Ummantelung der Glasscheibenkanten nach dem erfindungsgemäßen verfahren wird

zweckmäßigerweise in temperierbaren metallischen Formwerkzeugen z.B. aus Stahl, Gußeisen, Aluminium oder in Kunststofformen, z.B. aus Epoxidharzen, ungesättigen Polyesterharzen u.a. durchgeführt. Verewendung finden üblicherweise mehrteilige Formwerkzeuge mit einer oberen und unteren Formplatte, die zwischen sich den umlaufenden Aufnahmeraum für die Schnittkante der Glasscheibe und den Freiraum für die reaktionsfähige PU-, PU-PH- oder PH-Elastomermischung bilden. Zur Abdichtung des auszugießenden bzw. vorzugsweise auszuspritzenden Freiraums und zum Verhindern eines kapillaren Kriechens der reaktionsfähigen Elastomerischung entlang dem Glasscheibenrand wird zwischen dem Formwerkzeug und der Glasscheibe zweckmäßigerweise ein Dichtungsprofil aus elastichem Material, beispielsweise aus Kunststoffpolymeren, -polykondensations- oder -polyadditionsprodukten eingelegt oder ein anderes Dichtungsmittel eingebracht. Ferner können in dem Freiraum zusätzliche Befestigungselemente angeordnet oder die Formwerkzeugoberfläche des Freiraums mit Trennfolien oder vorzugsweise Dekormaterialien, beispielseweise aus Metall- oder bedruckten Kunststoff-Folien beschichtet oder in den Freiraum Zierleisten aus Metall oder Kunststoff engelegt werden und über die PU-, PU-PH oder PH-Elastomeren mit der Glasscheibe in einem Arbeitsgang verbunden werden.

Die Glasscheibe wird zweckmäßigerweise horizontal in das Formwerkzeug eingelegt. Andere Neigungswinkel zwischen 0 und 90°, vorzugsweise 0 und 45° sind jedoch ebenfalls möglich. Ferner kann das die Glasscheibe enthaltende verschlossene Formwerkzeug um die 3 senkrecht aufeinander stehende Raumachsen beliebig gedreht oder die reaktionsfähige Elastomermischung von unten, oben und/oder den Seiten eingespitzt werden.

Die Herstellung der PU-, PU-PH- oder PH-Elastomeren erfolgt nach dem Prepolymer-Verfahren oder vorzugsweise nach dem one shot-Verfahren, beispielsweise durch Eingießen der Reaktionsmischung in den Freiraum des Formwerkzeugs oder vorzugsweise durch Einspritzen mit Hilfe der bekannten Reaktionsspritzguß-Technik (RIM). Diese Verfahrensweise wird beispielswiese beschrieben von Piechota und Röhr in "Integralschaumstoff", Carl-Hanser-Verlag, München, Wien 1975; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Kettenverlängerungsmittel und/oder Vernetzer (c) in den höhermolekularen Verbindungen mit mindestens zwei reaktiven Wasserstoffatomen (b) zu lösen und mit den Katalysatoren sowie gegebenenfalls Hilfs- und Zusatzstoffen in der Komponente (A) zu vereinigen und als Komponente (B) die organischen Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die Kantenprofile aus PU-, PU-PH- oder PH-elastomeren eine Dichte von 0,8 bis 1,4 $g/cm^3$, vorzugsweise von 0,9 bis 1,2 $g/cm^3$ besitzen, wobei gegebenenfalls zellige Elastomere beispielsweise gebildet werden können durch in das Reaktionsgemisch eingeschlagene Gase, insbesondere Luft, durch Verwendung von Feuchtigkeit enthaltende Ausgangsstoffe (b) bis (e) oder durch gezielte Zugabe von Wasser und/oder inerten physikalisch wirkenden Treibmitteln. Die Ausgangskomponenten werden bei Temperaturen von 15 bis 80°C, vorzugsweise von 20 bis 55°C gemischt und in das Formwerkzeug eingebracht. Die Formwerkzeugtemperatur beträgt zweckmäßigerweise 20 bis 90°C, vorzugsweise 30 bis 75°C.

Die nach dem erfindungsgemäßen Verfahren erhaltenen Kantenprofile aus PU-, PU-PH- oder PH-Elastomeren besitzen eine Härte von Shore A 40 bis shore D 60, vorzugsweise von Shore A 40 bis 80 und insbesondere von Shore A 40 bis 60, nach DIN 53 505, eine Zugfestigkeit von 5 bis 27 $N/mm^2$, vorzugsweise von 5 bis 16 $N/mm^2$ nach DIN 53 504 und eine Weiterreißfestigkeit von 3,5 bis 30 N/mm, vorzugsweise von 3,5 bis 19 N/mm nach DIN 53 507.

Die mit PU-, PU-PH- oder PH-Elastomeren ummantelten Glasscheiben finden vorzugsweise Verwendung in Verkehrsmitteln, beispielsweise in Schienen- und insbesondere Kraftfahrzeugen.

Die in den Beispielen genannten Teile beziehen sich auf das Gewicht.

Biespiel 1

a) Eine 5,5 mm dicke Silikatglasscheibe wurde mit einer Lösung aus 3 Gewichtsteilen γ-Aminopropyltrimethoxisilan in 97 Gewichtsteilen Isopropanol im Bereich des späteren Kantenumgusses Beschichtet. Der Haftvermittlerauftrag erfolgte mit einem Filztupfer in einer Schichtdicke im flüssigen Zustand von 40 µm. Die Silikatglasscheibe wurde anschließend getrocknet.

b) Eine 5,5 mm dicke Silikatglasscheibe wurde analog den Angaben des Beispiels 1a) beschichtet. Nach dem Verdunsten des Isopropanols wurde eine Lösung aus 5 Gewichtsteilen eines NCO-Gruppen enthaltenden Prepolymeren aus 4,4'-Diphenylmethan-diisocyanat und Butandiol-1,4-polyadipat mit einem NCO-Gehalt von 1,7 Gew.% und 95 Gewichtsteilen Methylethylketon in einer Schichtdicke in flüssigem Zustand von 40 µm aufgetragen und die Silikatglasscheibe getrocknet.

Beispiel 2

A-Komponente: Mischung aus

81,0 Gew.-Teilen eines Polyether-polyols mit einer OH-Zahl von 26, das hergestellt wurde durch Addition von 1,2-Propylenoxid und anschließender Addition von Ethylenoxid an Trimethylolpropan,

12,6 Gew.-Teilen 1,3-Dimethyl-5-tert.-butyl-2,4-diaminobenzol,

5,2 Gew.-Teilen 1,3-Phenylen-diamin,

0,33 Gew.-Teilen 1,4-Diazabicyclo-(2,2,2)-octan und

0,1 Gew.-Teilen Dibutylzinndilaurat

B-Komponente:

48 Gew.-Teile einer Mischung aus Polyoxypropylenglykol- und carbodiimidmodifiziertem 4,4'-Diphenylmethan-dissocyanat mit einem NCO-Gehalt von 26,5 Gew.%.

Die A- und B-Komponenten wurden auf 50°C erwämt und nach dem Reaktions-spritzguß-Verfahren auf einer Hochdruckdosieranlage vom Typ ®Puromat 30 der Elastogran-Maschinenbau in den Freiraum eines verschlossenen, auf 70°C temperierten Formwerkzeugs aus Aluminium, das eine gemäß Beispiel 1a behandelte Silikatglasscheibe horizontal eingelegt enthielt, ohne Anwendung externer Trennmittel eingespritzt. Die Formstandzeit betrug 30 Sekunden.

Das erhaltene PU-PH-Elatomere besaß folgende mechanische Eigenschaften:

| | |
|---|---|
| Dichte nach DIN 53 420 | 1,1 g/cm$^3$ |
| Shore D-Härte nach DIN 53 505 | 61 |
| Zugfestigkeit nach DIN 53 504 | 28,0 N/mm$^2$ |
| Weiterreißfestigkeit nach DIN 53 507 | 28,7 N/mm |

Beispiel 3

A-Komponente: Mischung aus

79,2 Gew.-Teilen eines Polyether-polyols mit einer OH-Zahl von 26 gemäß Beispiel 2,

8,23 Gew.-Teilen Ethylenglykol,

3.00 Gew.-Teilen Methylenchlorid,

0,12 Gew.-Teilen Dibutylzinndilaurat,

0,15 Gew.-Teilen Triethylendiamin in Ethylenglykol (33 gew.%ige Lösung),

5,8 Gew.-Teilen Schwarzpaste und

2,5 Gew.-Teilen Zinkstearat.

B-Komponente:

56,0 Gew.-Teile der modifizierten Polyisocyanatmischung nach Beispiel 2.

Die Herstellung des Kantenumgusses erfolgte analog den Angaben des Beispiels 2 mit dem Unterschied, daß die Glasscheibe gemäß Beispiel 1b vorbehandelt wurde.

Das erhaltene PU-Elastomere besaß folgende mechanische Eigenschaften:

| | |
|---|---|
| Dichte nach DIN 53 420 | 1,05 g/cm$^3$ |
| Shore A-Härte nach DIN 53 505 | 90 |
| Zugfestigkeit nach DIN 53 504 | 16 N/mm$^2$ |
| Weiterreißfestigkeit nach DIN 53 507 | 19 N/mm |

Beispiel 4

A-Komponente: Mischung aus

68,37 Gew.-Teilen eines Polyether-polyols mit einer OH-Zahl von 26 gemäß Beispiel 2,

18,78 Gew.-Teilen Ethylenglykol,

3,02 Gew.-Teilen Methylenchlorid,

0,01 Gew. Teilen Dibutylzinndilaurat,

0,011 Gew.-Triethylendiamin in Ethylenglykol (25 gew.%ige Lösung),

1,76 Gew.-Teilen Zinkstearat und

6,05 Gew.-Teilen Schwarzpaste.

B-Komponente:

112 Gew.-Teile einer Mischung aus polyoxypropylenglykol- und carbodiimidmodifiziertem 4,4'-Diphenylmethan-diisocyanat mit einem NCO-Gehalt von 28 Gew.%.

Die Herstellung des Kantenumgusses erfolgte analog den Angaben des Beispiels 3.

Das erhaltene PU-Elastomere besaß folgende mechanische Eigenschaften:

| | |
|---|---|
| Dichte nach DIN 53 420 | 1,05 g/cm$^3$ |
| Shore A-Härte nach DIN 53 505 | 62 |
| Zugfestigkeit nach DIN 53 504 | 22,0 N/mm$^2$ |
| Weiterreißfestigkeit nach DIN 53 507 | 25,0 N/mm$^2$ |

**Patentansprüche**

1. Verfahren zum Ummanteln von Glasscheibenkanten mit einem Kunststoff mit Hilfe eines Formwerkzeugs, wobei man

1. die Glasscheibe in das offene Formwerkzeug einlegt,

2. das Formwerkzeug verschließt,

3. den hierbei gebildeten Freiraum zwischen Glasscheibe und Formwerkzeug mit einem aushärtenden Kunststoff beschickt und

4. diesen aushärten läßt,

dadurch gekennzeichnet, daß der aushärtende Kunststoff aus einer reaktionsfähigen Mischung besteht, die enthält

a) organische Polyisocyanate,

b) höhermolekulare Verbindungen mit mindestens zwei reaktiven Wasserstoffatomen, ausgewählt aus der Gruppe der Polyether-polyamine, Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten höhermolekularen Verbindungen,

c) Kettenverlängerungsmittel und/oder Vernetzer mit einem Molekulargewicht von 60 bis 600 und einer Funktionalität von 2 bis 4, ausgewählt aus der Gruppe der aliphatischen, cycloaliphatischen oder araliphatischen Diole und/oder Triole, der sekundären aromatischen Diamine, der primären, unsubstituierten und/oder substituierten aromatischen Di- und/oder höherwertigen Polyamine und

d) Katalysatoren sowie gegebenenfalls

e) Hilfsmittel und/oder Zusatzstoffe

und man diese Reaktionsmischung in den Freiraum zwischen Glasscheibe und Formwerkzeug mittels der Reaktionsspritzgußtechnik einspritzt und zu Polyurethan-, Polyurethan-Polyharnstoff- oder Polyharnstoff-Elastomeren aushärten läßt.

2. Verfahren nach Anspruch 1, dadurch gekennzeichnet, daß man die reaktionsfähige Mischung aus den Komponenten (a) bis (d) und gegebenenfalls (e) nach dem one shot-Verfahren umsetzt.

3. Verfahren nach Anspruch 1, dadurch gekennzeichnet, daß die höhermolekularen Verbindungen (b) ein Molekulargewicht von 800 bis 8000 und eine Funktionalität von 2 bis 8 besitzen und ausgewählt sind aus der Gruppe der Polyether-polyole, Polyester-polyole, Polythioether-polyole, Polyesteramide, hydroxylgruppenhaltigen Polyacetale und/oder hydroxylgruppenhaltigen aliphatischen Polycarbonate.

4. Verfahren nach Anspruch 1, dadurch gekennzeichnet, daß die reaktionsfähige Mischung Polyurethan-, Polyurethan-Polyharnstoff- oder Polyharnstoff-Elastomere bildet, die eine Dichte von 0,8 bis 1,4 $g/cm^3$, eine Härte von Shore A 40 bis Shore D 60 nach DIN 53 505, eine Zugfestigkeit von 5 bis 27 $N/mm^2$ nach DIN 53 504 und eine Weiterreißfestigkeit von 3,5 bis 30 N/mm nach DIN 63 507 besitzen.

5. Verfahren nach Anspruch 1, dadurch gekennzeichnet, daß die Glasscheibe aus Silikatglas besteht.

6. Verfahren nach Anspruch 1, dadurch gekennzeichnet, daß die Glasscheibe an der Grenzfläche zum Polyurethan-, Polyurethan-Polyharnstoff- oder Polyharnstoff-Elastomeren vor der Ummantelung mit einem oder mehreren Haftvermittler beschichtet wird.

**Revendications**

1. Procédé pour enrober les côtés de disques en verre d'une matière plastique à l'aide d'un outil de moulage, conformément auquel

1. On introduit le disque de verre dans l'outil de moulage ouvert,

2. On ferme l'outil de moulage,

3. On garnit le volume libre ainsi formé entre la disque de verre et l'outil de moulage d'une matière plastique durcissable et

4. On laisse durcir cette dernière,

caractérisé en ce que la matière plastique durcissable se compose d'un mélange susceptible d'entrer en réaction, qui contient

a) des polyisocyanates organiques,

b) des composés de poids moléculaire élevé, comportant au moins deux atomes d'hydrogène réactifs, choisis dans le groupe formé par les polyesters-polyamines, les polyéthers-polyols, les polyesters-polyols, les polythioéthers-polyols, les polyesteramides, les polyacétals contenant des radicaux hydroxyle et les polycarbonates aliphatiques contenant des radicaux hydroxyle, ou des mélanges d'au moins Deux des composés de poids moléculaire élevé précités,

c) des agents d'allongement des chaînes et/ou des agents de réticulation, comportant un poids moléculaire de 60 à 600 et une fonctionnalité de 2 à 4, choisis dans le groupe formé par les triols et/ou diols cycloaliphatiques ou araliphatiques, les diamines aromatiques secondaires, les di- et/ou polyamines supérieures, aromatiques, non substituées et/ou substituées, primaires et

d) des catalyseurs, comme éventuellement aussi

e) des adjuvants et/ou des additifs

et on injecte ce mélange réactionnel dans le volume libre entre le disque de verre et l'outil de moulage

selon une technique de moulage par injection à réaction et on le laisse durcir en élastomères de polyuréthanne, de polyuréthanne-polyurée, ou de polyurée.

2. Procédé suivant la revendication 1, caractérisé en ce que l'on fait réagir le mélange susceptible d'entrer en réaction des composants (a) à (d) et éventuellement (e) selon le procédé en une étape (one shot).

3. Procédé selon la revendication 1, caractérisé en ce que les composés de poids moléculaire élevé (b) possèdent un poids moléculaire de 800 à 8000 et une fonctionnalité de 2 à 8 et en ce qu'on les choisit dans le groupe formé par les polyéthers-polyols, les polyesters-polyols, les polythioéthers-polyols, les polyesteramides, les polyacétals contenant des radicaux hydroxyle et/ou les polycarbonates aliphatiques contenant des radicaux hydroxyle.

4. Procédé selon la revendication 1, caractérisé en ce que le mélange susceptible d'entrer en réaction forme des élastomères de polyuréthanne, de polyuréthanne-polyurée, ou de polyurée, qui possèdent une masse spécifique de 0,8 à 1,4 $g/cm^3$, une dureté Shore A de 40 à Shore D de 60, selon la norme DIN 53 505, une résistance à la traction de 5 à 27 $N/mm^2$, selon la norme DIN 53 504 et une résistance à la poursuite de la déchirure amorcée de 3,5 à 30 N/mm selon la norme DIN 63 507.

5. Procédé suivant la revendication 1, caractérisé en ce que le disque de verre se compose de verre silicaté.

6. Procédé suivant la revendication 1, caractérisé en ce que l'on revêt le disque de verre à l'interface de contact avec l'élastomère de polyuréthanne, de polyuréthanne-polyurée, ou de polyurée d'un ou plusieurs agents d'adhérence, préalablement à l'enrobage.

**Claims**

1. A process for enveloping the edges of a glass pane with a plastic using a mold, in which

1. the glass pane is inserted into the open mold,
2. the mold is closed,
3. the resulting free space between the glass pane and the mold is charged with a curable plastic and
4. the latter is cured,

wherein the curable plastic consists of a reactive mixture which contains

a) organic polyisocyanates,

b) relatively high molecular weight compounds having two or more reactive hydrogen atoms, selected from the group consisting of the polyether polyamines, polyether polyols, polyester polyols, polythioether polyols, polyester amides, hydroxyl-containing polyacetals and hydroxyl-containing aliphatic polycarbonates, or a mixture of two or more of the stated relatively high moecular weight compounds,

c) chain extenders and/or crosslinking agents having a molecular weight of from 60 to 600 and a functionality of from 2 to 4, selected from the group consisting of the aliphatic, cycloaliphatic or araliphatic diols and/or triols, the secondary aromatic diamines, the primary, unsubstituted and/or substituted aromatic di- and/or polyvalent polyamines, and

d) catalysts, with or without

e) assistants and/or additives,

and this mixture is injected into the free space between the glass pane and the mold by the reaction injection molding method and is allowed to cure to give polyurethane, polyurethane/polyurea or polyurea elastomers.

2. A process as claimed in claim 1, wherein the reactive mixture of the components of (a) to (d) and, if required (e) is reacted by the one shot method.

3. A process as claimed in claim 1, wherein the relatively high molecular weight compounds of (b) have a molecular weight of from 800 to 8000 and a functionality of from 2 to 8 and are selected from the group consisting of the polyether polyols, polyester polyols, polythioether polyols, polyester amides, hydroxyl-containing polyacetals and/or hydroxyl-containing aliphatic polycarbonates.

4. Process as claimed in claim 1, wherein the reactive mixture forms polyurethane, polyurethane/polyurea or polyurea elastomers which have a density of from 0.8 to 1.4 $g/cm^3$, a hardness of from Shore A 40 to Shore D 60 according to DIN 53 505, a tensile strength of from 5 to 27 $N/mm^2$ according to DIN 53 504 and a tear propagation strength of from 3.5 to 30 N/mm according to DIN 63 507.

5. A process as claimed in claim 1, wherein the glass pane consists of silicate glass.

6. A process as claimed in claim 1, wherein, before being enveloped, the glass plane is coated with one or more adhesion promoters at the interface with the polyurethane, polyurethane/polyurea or polyurea elastomers.